# EUROPEAN PATENT APPLICATION

(11) **EP 4 494 746 A1**
(43) Date of publication of application: **22.01.2025**
(21) Application number: 23795819.4
(22) Date of filing: 17.01.2023
(51) Int. Cl.: B01D 53/86, B01D 53/90, F23G 7/06, F23J 15/00

(54) **EXHAUST GAS TREATMENT APPARATUS, COMBUSTION FACILITY AND EXHAUST GAS TREATMENT METHOD**

(30) Priority: 25.04.2022 JP 2022071408
(71) Applicant: Mitsubishi Heavy Industries, Ltd., Tokyo 100-8332 (JP)
(72) Inventor: NOCHI, Katsumi, Tokyo 100-8332 (JP); KAKO, Hiroshi, Tokyo 100-8332 (JP); MASUDA, Tomotsugu, Tokyo 100-8332 (JP); KAI, Keiichiro, Tokyo 100-8332 (JP); YOSHIMURA, Hiroyuki, Tokyo 100-8332 (JP)
(74) Representative: Studio Torta S.p.A.
(86) International application number: PCT/JP2023/001083
(87) International publication number: WO 2023/210070

(57) **Abstract**

An exhaust gas treatment apparatus includes: a second reductant supply part, disposed in a flow path of combustion exhaust gas of a fuel containing a first reductant that is capable of reducing a specific substance, for supplying a second reductant for reducing the specific substance in the combustion exhaust gas to the combustion exhaust gas; and a first reductant decreasing part, disposed upstream of the second reductant supply part in the flow path, for decreasing the first reductant in the combustion exhaust gas.

## Description

### TECHNICAL FIELD

The present disclosure relates to an exhaust gas treatment apparatus, a combustion facility, and an exhaust gas treatment method.

The present application claims priority based on Japanese Patent Application No. 2022-071408 filed on April 25, 2022, the entire content of which is incorporated herein by reference.

### BACKGROUND ART

Specific substances (e.g., nitrogen oxides (NOx)) contained in combustion exhaust gas from combustion facilities such as power generation boilers, gas turbines, and combustion furnaces may be removed or reduced by decomposing them into harmless substances (in the case of nitrogen oxides, nitrogen and water) using reductants in the presence of catalysts.

For example, Patent Document 1 describes providing a catalyst layer that promotes the reduction reaction of nitrogen oxides in the exhaust gas flow path and adding ammonia to the exhaust gas upstream of the catalyst layer to reduce and decompose nitrogen oxides in the exhaust gas by reaction with ammonia in the catalyst layer.

### Citation List

### Patent Literature

Patent Document 1: JP2009-545437A

### SUMMARY

### Problems to be Solved

In exhaust gas treatment to reduce NOx contained in the combustion exhaust gas from conventional fossil fuel (coal, oil, or natural gas, etc.), the amount of a reductant supplied to reduce NOx can be appropriately adjusted based on the NOx concentration in the flow path of the combustion exhaust gas.

In contrast, in the case of fuel containing a reductant (e.g., ammonia) that acts to reduce a specific substance (e.g., NOx), the combustion exhaust gas of the fuel contains the unburned content of this reductant. The unburned content of the reductant (first reductant) acts to reduce the specific substance (e.g., NOx), so it becomes a disturbance in the control of the amount of a reductant (second reductant) supplied to reduce the specific substance (e.g., NOx) in the combustion exhaust gas. On the other hand, a concentration distribution (variation) of the unburned reductant (first reductant) in the combustion exhaust gas within a flow path cross-section may lead to an imbalanced ratio between the reductant and NOx in the combustion exhaust gas. Therefore, it is not easy to adjust the supply amount of the reductant (second reductant).

In view of the above circumstances, an object of at least one embodiment of the present invention is to provide an exhaust gas treatment apparatus, a combustion facility, and an exhaust gas treatment method that facilitate appropriate adjustment of the supply amount of a reductant (second reductant) for reducing a specific substance in combustion exhaust gas of a fuel containing a reductant (first reductant).

### Solution to the Problems

An exhaust gas treatment apparatus according to at least one embodiment of the present includes: a second reductant supply part, disposed in a flow path of combustion exhaust gas of a fuel containing a first reductant that is capable of reducing a specific substance, for supplying a second reductant for reducing the specific substance in the combustion exhaust gas to the combustion exhaust gas; and a first reductant decreasing part, disposed upstream of the second reductant supply part in the flow path, for decreasing the first reductant in the combustion exhaust gas.

Further, a combustion facility according to at least one embodiment of the present invention includes: a combustion apparatus configured to burn a fuel containing a first reductant that is capable of reducing a specific substance; and the above-described exhaust gas treatment apparatus configured to treat combustion exhaust gas of the fuel from the combustion apparatus.

Further, an exhaust gas treatment method according to at least one embodiment of the present includes: a step of, in a flow path of combustion exhaust gas of a fuel containing a first reductant that is capable of reducing a specific substance, supplying a second reductant for reducing the specific substance in the combustion exhaust gas to the combustion exhaust gas; and a step of decreasing the first reductant in the combustion exhaust gas at a position upstream of where the second reductant is supplied in the flow path.

### Advantageous Effects

At least one embodiment of the present invention provides an exhaust gas treatment apparatus, a combustion facility, and an exhaust gas treatment method that facilitate appropriate adjustment of the supply amount of a reductant (second reductant) for reducing a specific substance in combustion exhaust gas of a fuel containing a reductant (first reductant).

### BRIEF DESCRIPTION OF DRAWINGS

FIG. 1 is a schematic diagram of a combustion facility according to an embodiment.
FIG. 2 is a schematic diagram of an exhaust gas treatment apparatus according to an embodiment.
FIG. 3 is a graph showing the relationship (calculation example) between the reaction amount in the first reductant decreasing part (horizontal axis) and the coefficient of variation of the concentration ratio of ammonia to NOx at the position immediately after the second reductant supply part (vertical axis).
FIG. 4 is a graph showing the relationship (calculation example) between the reaction amount in the first reductant decreasing part (horizontal axis) and the concentrations of ammonia and NOx in the stack (vertical axis).
FIG. 5 is a diagram showing the relationship (calculation example) between the ratio of average unburned NH₃ concentration to average NOx concentration upstream of the first reductant decreasing part (horizontal axis) and the ratio of ammonia concentration downstream of the first reductant decreasing part and upstream of the second reductant supply part to the supply amount (concentration) of ammonia in the second reductant supply part (vertical axis).
FIG. 6 is a schematic diagram of an exhaust gas treatment apparatus according to an embodiment.
FIG. 7 is a schematic diagram of an exhaust gas treatment apparatus according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

### (Configuration of combustion facility)

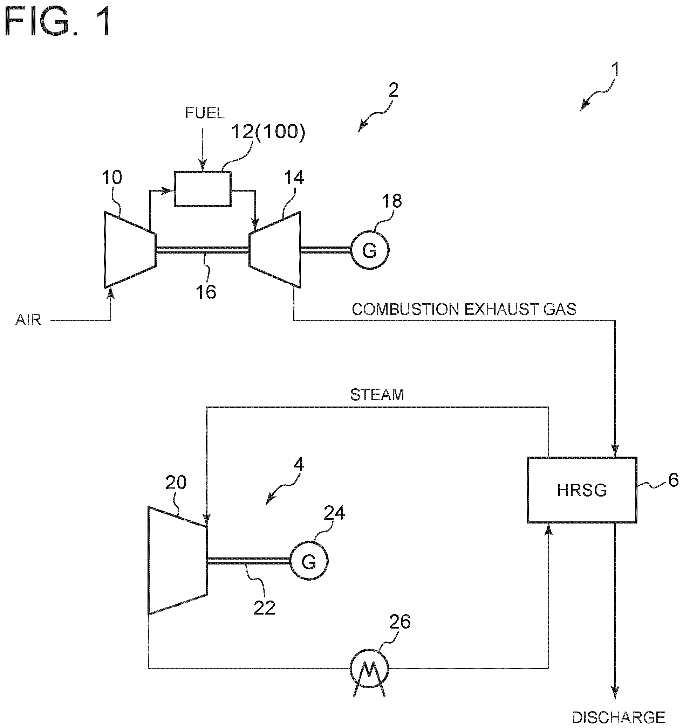

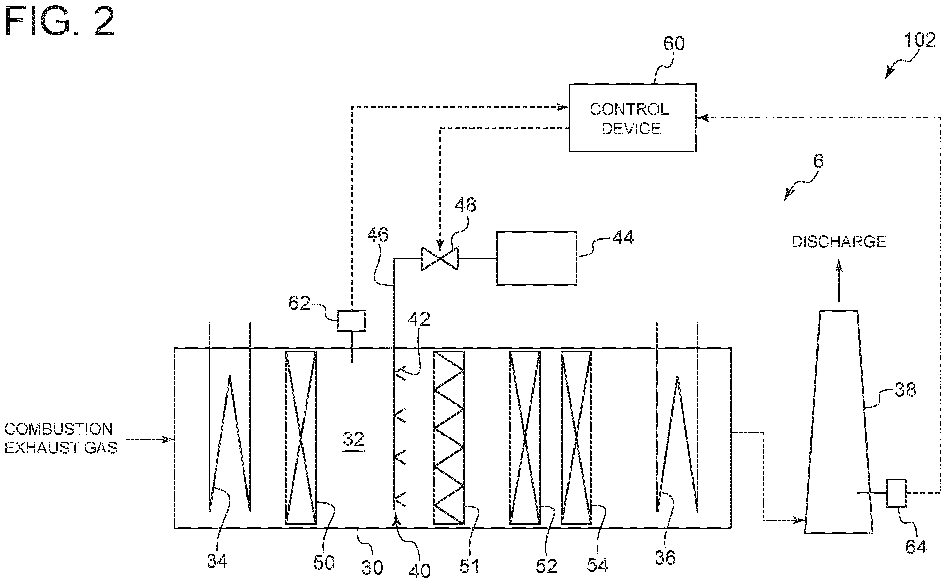

FIG. 1 is a schematic diagram of an example of a combustion facility to which an exhaust gas treatment apparatus according to some embodiments is applicable. FIGs. 2, 6, and 7 are each a schematic diagram of the exhaust gas treatment apparatus according to an embodiment. In some embodiments, a combustion facility 1 includes a combustion apparatus 100 (see FIG. 1) configured to burn a fuel containing a first reductant (e.g., ammonia) that is capable of reducing a specific substance (e.g., NOx), and an exhaust gas treatment apparatus 102 (see FIG. 2) configured to treat combustion exhaust gas from the combustion apparatus 100.

The combustion facility 1 shown in FIG. 1 is a gas turbine combined cycle (GTCC) power generation facility with a gas turbine facility 2 including a combustor 12 as the combustion apparatus 100, a steam turbine facility 4, and a heat recovery steam generator (HRSG) 6.

The gas turbine facility 2 includes a compressor 10, the above-described combustor 12, and a turbine 14. The compressor 10 is configured to compress air to produce compressed air. The combustor 12 is configured to generate combustion gas by combustion reaction between the compressed air from the compressor 10 and fuel. The turbine 14 is configured to be rotary driven by the combustion gas from the combustor 12. To the turbine 14, a generator 18 is connected via a rotational shaft 16, so that the generator 18 is driven by rotational energy of the turbine 14 to generate electric power. The combustion gas having finished work in the turbine 14 is discharged from the turbine 14 as the combustion exhaust gas.

The heat recovery steam generator 6 is configured to generate steam by heat of the combustion exhaust gas from the gas turbine facility 2. As shown in FIGs. 2, 6, and 7, the heat recovery steam generator 6 has a duct 30 (see FIG. 2) to which the combustion exhaust gas from the gas turbine facility 2 is introduced and heat transfer tubes 34, 36 disposed in a flow path 32 of the combustion exhaust gas defined by the duct 30. Into the heat transfer tubes 34, 36, condensate from a condenser 26 of the steam turbine facility 4 is introduced. In the heat transfer tubes 34, 36, steam is generated by heat exchange between the condensate and the combustion exhaust gas flowing in the duct 30. The exhaust gas having passed through the duct 30 of the heat recovery steam generator 6 is discharged through a stack 38.

The steam turbine facility 4 includes a turbine 20 configured to be driven by the steam from the heat recovery steam generator 6. To the turbine 20, a generator 24 is connected via a rotational shaft 22, so that the generator 24 is driven by rotational energy of the turbine 20 to generate electric power. The steam having finished work in the turbine 20 is led to the condenser 26, condensed into condensate water in the condenser 26, and supplied to the heat recovery steam generator 6.

The fuel supplied to the combustion apparatus 100 (in the above-described embodiment, combustor 12 of gas turbine facility 2) is a fuel containing a first reductant that is capable of reducing a specific substance.

The specific substance is a substance that can be contained in the combustion exhaust gas of the fuel, for example NOx (nitrogen oxides such as NO and NO₂).

If the specific substance is NOx, the first reductant is a substance that acts to reduce NOx and may include, for example, ammonia or urea. That is, the fuel may contain ammonia or urea. The fuel may contain components other than the first reductant (e.g., carbon-containing fuel such as coal, oil, or natural gas).

### (Configuration of exhaust gas treatment apparatus)

As shown in FIGs. 2, 6, and 7, the exhaust gas treatment apparatus 102 includes a first reductant decreasing part 50 and a second reductant supply part 40 disposed in the flow path 32 through which the combustion exhaust gas from the combustion apparatus 100 flows.

The second reductant supply part 40 is configured to supply a second reductant for reducing the specific substance (e.g., NOx) in the combustion exhaust gas to the combustion exhaust gas. By supplying the second reductant to the combustion exhaust gas containing the specific substance, the specific substance in the combustion exhaust gas can be reduced, thereby decreasing the specific substance in the combustion exhaust gas discharged through the stack 38. For example, if the specific substance is NOx, the reaction between NOx and the second reductant decomposes NOx in the combustion exhaust gas into nitrogen and water, decreasing NOx in the combustion exhaust gas.

As shown in FIGs. 2, 6, and 7, the second reductant supply part 40 may include a nozzle 42 configured to inject a liquid or gas containing the second reductant into the flow path 32. The nozzle 42 may be supplied with a liquid or gas containing the second reductant stored in a second reductant storage part 44 via a supply line 46. The supply line 46 may be provided with a valve 48 for adjusting the amount of the second reductant supplied through the second reductant supply part 40.

If the specific substance is NOx, the second reductant is a substance that acts to reduce NOx and may include, for example, ammonia or urea. The second reductant may be supplied to the combustion exhaust gas in the form of an aqueous solution (e.g., ammonia water or urea water).

In the flow path 32 of the combustion exhaust gas, a mixer 51 may be provided downstream of the second reductant supply part 40 to promote mixing of the combustion exhaust gas and the second reductant. By promoting the mixing of the combustion exhaust gas and the second reductant with the mixer, the reaction between the specific substance in the combustion exhaust gas and the second reductant can be accelerated.

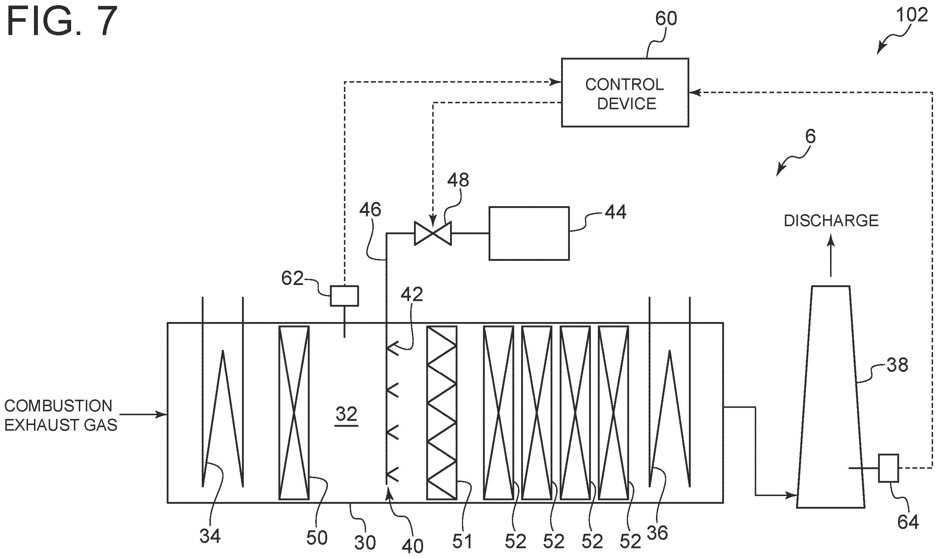

As shown in FIGs. 2, 6, and 7, in the flow path 32 of the combustion exhaust gas, a second reduction catalyst 52 may be provided downstream of the second reductant supply part 40 to promote the reduction reaction between the specific substance (e.g., NOx) in the combustion exhaust gas and the reductant (first reductant and/or second reductant). The second reduction catalyst 52 allows the specific substance in the combustion exhaust gas to react effectively with the reductant. If the specific substance is NOx and the reductant includes ammonia or urea, the second reduction catalyst may include a metal or metal compound containing, for example, titanium, vanadium or tungsten, molybdenum. As shown in FIG. 7, in the flow path 32 of the combustion exhaust gas, a plurality of second reduction catalysts 52 may be provided downstream of the second reductant supply part 40.

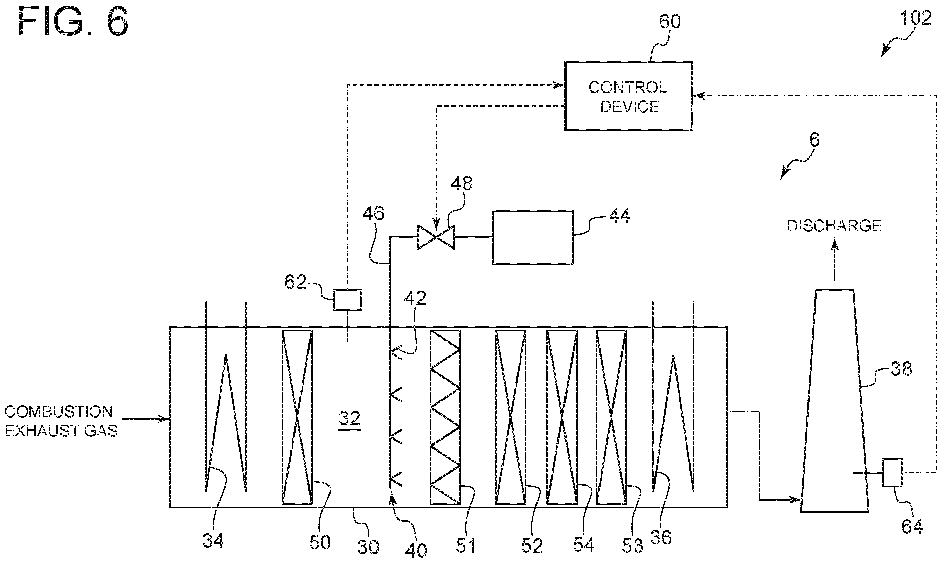

Further, as shown in FIGs. 2, 6, and 7, in the flow path 32 of the combustion exhaust gas, a reductant decomposition catalyst 54 may be provided downstream of the second reductant supply part 40 and the second reduction catalyst 52 to promote the decomposition reaction of the reductant (first reductant and/or second reductant) in the combustion exhaust gas. The reductant decomposition catalyst 54 decreases the remaining reductant in the combustion exhaust gas downstream of the second reduction catalyst 52 before discharging the exhaust gas through the stack 38. As shown in FIG. 6, in the flow path 32 of the combustion exhaust gas, a third reduction catalyst 53 may be provided downstream of the reductant decomposition catalyst 54 to promote the reduction reaction between the specific substance (e.g., NOx) in the combustion exhaust gas and the reductant (first reductant and/or second reductant).

The first reductant decreasing part 50 is disposed upstream of the second reductant supply part 40 in the flow path 32 of the combustion exhaust gas and is configured to decrease the first reductant in the combustion exhaust gas in the flow path 32. When fuel is burned in the combustion apparatus 100, part of the first reductant contained in the fuel becomes oxide (NOx if the first reductant is ammonia) through combustion reaction, while the remainder of the first reductant is not burned and remains in the combustion exhaust gas as the unburned content. That is, in the first reductant decreasing part 50, the unburned content of the first reductant remaining in the combustion exhaust gas is decreased.

In some embodiments, the first reductant decreasing part includes a reductant decomposition catalyst to promote the decomposition reaction of the first reductant. The reductant decomposition catalyst may be a catalyst to promote oxidative decomposition reaction of the first reductant. The reductant decomposition catalyst as the first reductant decreasing part 50 decomposes the unburned content of the first reductant contained in the combustion exhaust gas upstream of the second reductant supply part 40 in the flow path 32 of the combustion exhaust gas, thereby decreasing the unburned content of the first reductant. If the reductant includes ammonia or urea, the reductant decomposition catalyst may include a metal or metal compound containing, for example, platinum, copper, iron, cobalt, palladium, iridium, nickel or ruthenium.

In some embodiments, the first reductant decreasing part 50 includes a first reduction catalyst to promote the reaction between the specific substance and the first reductant. The first reduction catalyst as the first reductant decreasing part 50 allows the unburned content of the first reductant contained in the combustion exhaust gas to be consumed through oxidation-reduction reaction with the specific substance upstream of the second reductant supply part 40 in the flow path 32 of the combustion exhaust gas, thereby decreasing the unburned content of the first reductant. If the specific substance is NOx and the reductant includes ammonia or urea, the first reduction catalyst may include a metal or metal compound containing, for example, titanium, vanadium or tungsten, molybdenum, platinum, copper, iron, cobalt, palladium, iridium, nickel, ruthenium.

In some embodiments, the first reductant decreasing part 50 includes a neutralizer supply part configured to supply a neutralizer to the combustion exhaust gas to neutralize the first reductant. Supply of the neutralizer from the neutralizer supply part as the first reductant decreasing part 50 allows the unburned content of the first reductant contained in the combustion exhaust gas to be consumed through neutralization reaction with the neutralizer upstream of the second reductant supply part 40 in the flow path 32 of the combustion exhaust gas, thereby decreasing the unburned content of the first reductant. If the reductant includes ammonia or urea, the neutralizer may include, for example, sulfur trioxide (SO₃) or sulfuric acid.

In the first reductant decreasing part 50, at least part of the first reductant in the combustion exhaust gas is removed. Part of the first reductant that remains in the combustion exhaust gas without being removed by the first reductant decreasing part 50 may be consumed in a reduction reaction with a specific component (such as NOx) downstream of the first reductant decreasing part 50 (e.g., on the second reduction catalyst 52), or it may be decomposed on the reductant decomposition catalyst 54.

According to the above-described embodiment, in the flow path 32 of combustion exhaust gas of a fuel containing a first reductant (e.g., ammonia (NH₃)) that is capable of reducing a specific substance (e.g., NOx), the first reductant decreasing part 50 for decreasing the first reductant in the combustion exhaust gas is provided upstream of the second reductant supply part 40 which supplies a second reductant (e.g., ammonia) for reducing the specific substance (e.g., NOx) in the combustion exhaust gas. As a result, the first reductant (unburned content) in the combustion exhaust gas is decreased upstream of the second reductant supply part 40 in the flow path 32 of the combustion exhaust gas. Thus, since the second reductant is supplied to the combustion exhaust gas with the decreased unburned content of the first reductant, it is easy to adjust the supply amount of the second reductant, for example, the supply amount of the second reductant can be adjusted without considering the amount of unburned content of the first reductant in the combustion exhaust gas. On the other hand, the imbalance of the ratio between the first reductant and the specific substance (e.g., NH₃/NOx) downstream of the second reductant supply part 40 is reduced (smaller variation in the ratio), making it easier to adjust the supply amount of the second reductant. Therefore, according to the above-described embodiment, it is easy to appropriately adjust the supply amount of the reductant (second reductant) for reducing the specific substance in combustion exhaust gas of a fuel containing the reductant (first reductant).

In the flow path 32 of the combustion exhaust gas, the first reductant decreasing part 50 may be disposed upstream of the heat transfer tubes 34, 36, downstream of the heat transfer tubes 34, 36, or between the heat transfer tubes 34 and 36, as shown in FIGs. 2, 6, and 7.

The second reductant supply part 40 may be disposed only downstream of the first reductant decreasing part 50 in the flow path 32 of the combustion exhaust gas. In other words, the first reductant decreasing part 50 may be disposed upstream of the most upstream one of a plurality of second reductant supply parts 40. That is, in this case, the reductant for reducing the specific substance (e.g., NOx) in the combustion exhaust gas is not supplied upstream of the first reductant decreasing part 50 in the flow path 32.

As shown in FIGs. 2, 6, and 7, the exhaust gas treatment apparatus 102 may be equipped with a control device 60 for adjusting the supply amount of the second reductant from the second reductant supply part 40. The control device 60 may be configured to adjust the supply amount of the second reductant on the basis of the concentration of the specific substance (e.g., NOx) in the combustion exhaust gas.

The control device 60 may be configured to adjust the supply amount of the second reductant, on the basis of the measurement results by a concentration measuring part 62 or 64 for measuring the concentration of the specific substance in the combustion exhaust gas. In the exemplary embodiments shown in FIGs. 2, 6, and 7, the concentration measuring part 62 is configured to measure the concentration of the specific substance in the flow path 32 of the combustion exhaust gas at a position downstream of the first reductant decreasing part 50 and upstream of the second reductant supply part 40. Further, the concentration measuring part 64 is configured to measure the concentration of the specific substance in the stack 38 at a position downstream of the second reductant supply part 40.

The control device 60 may be configured to regulate the opening degree of the valve 48 in the supply line 46 for supplying the second reductant in order to adjust the supply amount of the second reductant.

The control device 60 includes a calculator equipped with a processor (e.g., CPU or GPU), a storage device (memory device; e.g., RAM), an auxiliary storage part, and an interface. The control device 60 receives a signal indicating a concentration measurement from the concentration measuring part 62 or 64 via the interface. The processor is configured to process the signals thus received. The processor may calculate an opening degree command value for the valve 48 on the basis of the concentration measurement by the concentration measuring part 62 or 64. The control device 60 may provide the calculated opening degree command value to an actuator for changing the opening degree of the valve 48.

If the specific substance is NOx, the NOx concentration in the combustion exhaust gas can be measured according to JIS K 0104 by using a chemiluminescent NOx meter (JIS B 7982), by non-dispersive infrared method (NDIR method), or by zinc reduction naphthylethylenediamine absorptiometry (Zn-NEDA method). The concentration measuring part 62 or 64 may be configured to measure the NOx concentration using any of these methods.

In some embodiments, the control device 60 is configured to adjust the supply amount of the second reductant from the second reductant supply part 40, on the basis of the concentration of the specific substance in the flow path 32 of the combustion exhaust gas at a position downstream of the first reductant decreasing part 50 and upstream of the second reductant supply part 40. As the concentration of the specific substance in the flow path 32 downstream of the first reductant decreasing part 50 and upstream of the second reductant supply part 40, a measured value of the concentration of the specific substance in the combustion exhaust gas by the concentration measuring part 62 may be used.

In the above-described embodiment, the supply amount of the second reductant is adjusted based on the concentration of the specific substance downstream of the first reductant decreasing part 50 and upstream of the second reductant supply part 40, so that an appropriate amount of the second reductant that can reduce the specific substance in the combustion exhaust gas is supplied. Further, as described above, the first reductant decreasing part 50 decreases the first reductant (unburned content) in the combustion exhaust gas upstream of the second reductant supply part 40 in the flow path 32 of the combustion exhaust gas, so that, as in this embodiment, the supply amount of the second reductant can be appropriately adjusted based on the concentration of the specific substance, regardless of the concentration of the first reductant in the flow path 32 of the combustion exhaust gas.

For example, the control device 60 may be configured to, at each of multiple positions in a cross-section of the flow path 32, supply the second reductant in an amount (the same amount) determined based on the concentration (e.g., average value of multiple positions) of the specific substance downstream of the first reductant decreasing part 50 and upstream of the second reductant supply part 40. In this case, the second reductant supply part 40 is configured to supply the second reductant to each of the multiple positions in the cross-section of the flow path 32. For example, the second reductant supply part 40 may include a plurality of nozzles 42 configured to supply the second reductant to each of the multiple position in the cross-section of the flow path 32.

Alternatively, the control device 60 may be configured to adjust the supply amount of the second reductant from the second reductant supply part 40 so that the concentration ratio of the second reductant to the specific substance at each of multiple positions in a cross-section of the flow path 32 immediately after the second reductant supply part 40 in the flow path 32 is a predetermined ratio (e.g., a-times stoichiometric ratio). If the specific substance is NOx and the second reductant is ammonia, the concentration ratio is the concentration ratio of ammonia (NH₃) to NOx ([NH₃]/[NOx]). In this case, the concentration measuring part 62 is configured to measure the concentration of the specific substance at each of multiple positions in a cross-section of the flow path 32, and the second reductant supply part 40 is configured to supply the second reductant to each of multiple positions in a cross-section of the flow path 32 (corresponding to the positions where the concentration is measured by the concentration measuring part 62).

In some embodiments, the control device 60 is configured to adjust the supply amount of the second reductant from the second reductant supply part 40, on the basis of the concentration of the specific substance in the stack 38 through which the combustion exhaust gas from the flow path 32 is discharged. As the concentration of the specific substance in the stack 38, a measured value of the concentration of the specific substance in the combustion exhaust gas by the concentration measuring part 64 may be used.

According to the above-described embodiment, the supply amount of the second reductant from the second reductant supply part 40 is adjusted based on the concentration of the specific substance in the stack 38 through which the combustion exhaust gas from the flow path 32 is discharged, so that the concentration of the specific substance in the combustion exhaust gas discharged through the stack 38 is maintained within an appropriate range (such as below a regulation value).

Hereinafter, the effects obtained by the exhaust gas treatment apparatus according to some embodiments will be described. In the following description, it is assumed that in the exhaust gas treatment apparatus shown in FIG. 2, combustion exhaust gas of a fuel containing ammonia as the first reductant is introduced into the flow path 32, the combustion exhaust gas contains NOx as the specific substance, an ammonia decomposition catalyst is used as the first reductant decreasing part 50, and ammonia is used as the second reductant.

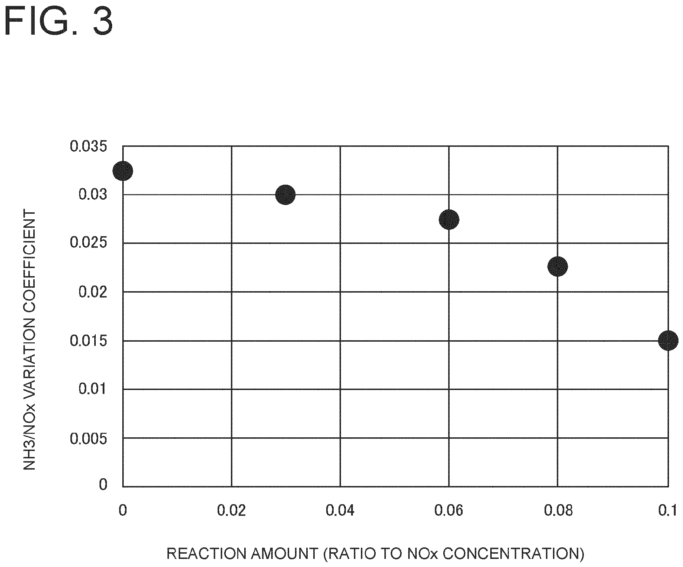

FIG. 3 is a graph showing the relationship (calculation example) between the reaction amount in the first reductant decreasing part 50 (horizontal axis) and the coefficient of variation of the concentration ratio of ammonia (the sum of first reductant (unburned content) and second reductant) to NOx at the position immediately after (downstream) the second reductant supply part 40 (vertical axis) when ammonia is supplied as the second reductant such that the ratio of ammonia as the second reductant supplied by the second reductant supply part 40 to the NOx concentration at the position (concentration measurement position by the concentration measuring part 62) downstream of the first reductant decreasing part 50 and upstream of the second reductant supply part 40 is a predetermined value (in this example, the ratio of ammonia (second reductant) to NOx is 1:1). Here, the reaction amount in the first reductant decreasing part indicates the proportion of NOx in the combustion exhaust gas reacted in the first reductant decreasing part. The reaction amount is changed by adjusting the amount of catalyst of the first reductant decreasing part. The coefficient of variation is a value obtained by dividing the standard deviation of the concentration ratio of ammonia (the sum of first reductant (unburned content) and second reductant) to NOx at multiple positions in a cross-section of the flow path 32 downstream of the second reductant supply part 40 and upstream of the second reduction catalyst 52 by the mean value and is an indicator of the variation in the concentration ratio.

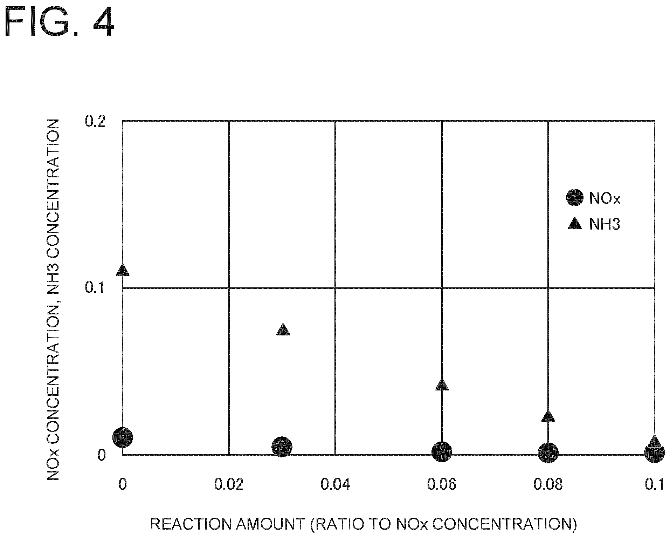

FIG. 4 is a graph showing the relationship (calculation example) between the above-described reaction amount (horizontal axis) and the concentrations of ammonia and NOx (average concentrations of multiple positions in a flow path cross-section) in the stack 38 (vertical axis) under the same conditions as those in FIG. 3.

The graph shown in FIG. 3 indicates that the greater the decrease amount (i.e., reaction amount with NOx) of unburned ammonia (unburned content of first reductant) in the first reductant decreasing part 50, the smaller the variation in the concentration ratio of ammonia to NOx downstream of the second reductant supply part. In other words, it indicates that if unburned ammonia is decreased in the first reductant decreasing part 50, the variation in the concentration ratio of ammonia to NOx downstream of the second reductant supply part can be reduced by adjusting the supply amount of the second reductant based on the NOx concentration without using the concentration of unburned ammonia.

Further, the graph shown in FIG. 4 indicates that the greater the reaction amount, the lower the concentrations of NOx and ammonia (NH₃) in the stack 38.

The graphs in FIGs. 3 and 4 show that the NOx and ammonia concentrations in the combustion exhaust gas discharged from the combustion facility 1 can be appropriately reduced based on the NOx concentration downstream of the first reductant decreasing part 50 and upstream of the second reductant supply part, even without considering the ammonia concentration (concentration of unburned content of first reductant) upstream of the second reductant supply part.

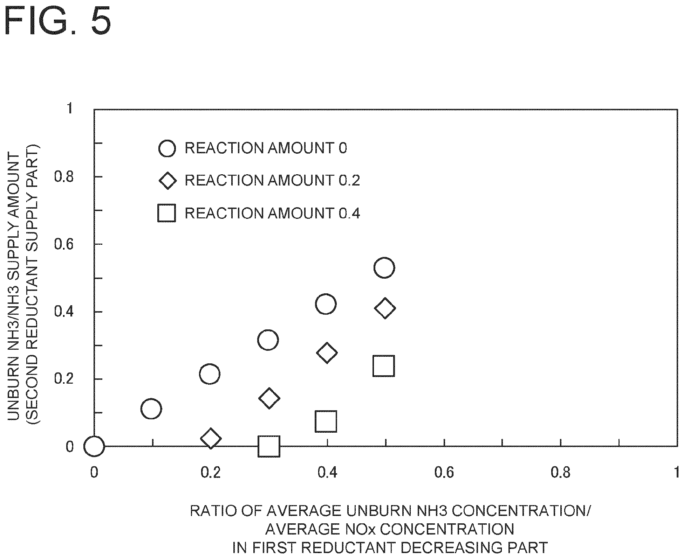

FIG. 5 is a diagram showing the relationship (calculation example) between the ratio of unburned NH₃ concentration to NOx concentration upstream of the first reductant decreasing part 50 (horizontal axis), the ratio of ammonia concentration (concentration of unburned content of first reductant) downstream of the first reductant decreasing part 50 and upstream of the second reductant supply part 40 to the supply amount (concentration) of ammonia (second reductant) in the second reductant supply part 40 (vertical axis), and the above-described reaction amount, under the same conditions as those in FIGs. 3 and 4. Each value is the average of the concentrations of multiple positions in a cross-section of the flow path 32.

The horizontal axis in FIG. 5 (the ratio of unburned NH₃ concentration to NOx concentration upstream of the first reductant decreasing part 50) represents the magnitude of the disturbance in the control of the ammonia supply amount by the second reductant supply part 40. The graph in FIG. 5 shows that, even with a larger disturbance (horizontal axis), the ratio of the concentration of ammonia (unburned content of first reductant) downstream of the first reductant decreasing part 50 and upstream of the second reductant supply part 40 to the supply amount of ammonia (second reductant) (vertical axis) decreases as the reaction amount in the first reductant decreasing part 50 increases. In other words, it indicates that even if unburned ammonia (unburned content of first reductant) reaching downstream of the first reductant decreasing part 50 increases, the effect of the disturbance is reduced as the reaction amount in the first reductant decreasing part 50 increases.

The contents described in the above embodiments would be understood as follows, for instance.
(1) An exhaust gas treatment apparatus (102) according to at least one embodiment of the present includes: a second reductant supply part (40), disposed in a flow path (32) of combustion exhaust gas of a fuel containing a first reductant (e.g., ammonia) that is capable of reducing a specific substance (e.g., NOx), for supplying a second reductant (e.g., ammonia) for reducing the specific substance in the combustion exhaust gas to the combustion exhaust gas; and a first reductant decreasing part (50), disposed upstream of the second reductant supply part in the flow path, for decreasing the first reductant in the combustion exhaust gas.
   With the above configuration (1), in the flow path of combustion exhaust gas of a fuel containing a first reductant (e.g., ammonia (NH₃)) that is capable of reducing a specific substance (e.g., NOx), the first reductant decreasing part for decreasing the first reductant in the combustion exhaust gas is provided upstream of the second reductant supply part which supplies a second reductant (e.g., ammonia) for reducing the specific substance (e.g., NOx) in the combustion exhaust gas. As a result, the first reductant (unburned content) in the combustion exhaust gas is decreased upstream of the second reductant supply part in the flow path of the combustion exhaust gas. Thus, since the second reductant is supplied to the combustion exhaust gas with the decreased unburned content of the first reductant, it is easy to adjust the supply amount of the second reductant, for example, the supply amount of the second reductant can be adjusted without considering the amount of unburned content of the first reductant in the combustion exhaust gas. On the other hand, the imbalance of the ratio between the first reductant and the specific substance (e.g., NH₃/NOx) downstream of the second reductant supply part is reduced (smaller variation in the ratio), making it easier to adjust the supply amount of the second reductant. Therefore, with the configuration (1), it is easy to appropriately adjust the supply amount of the reductant (second reductant) for reducing the specific substance in the combustion exhaust gas of a fuel containing the reductant (first reductant).
(2) In some embodiments, in the above configuration (1), the second reductant supply part is disposed only downstream of the first reductant decreasing part in the flow path.
   With the above configuration (2), since the second reductant supply part is disposed only downstream of the first reductant decreasing part, it is easier to adjust the supply amount of the reductant (second reductant) for reducing the specific substance in the combustion exhaust gas of a fuel containing the reductant (first reductant).
(3) In some embodiments, in the above configuration (1) or (2), the first reductant decreasing part includes a reductant decomposition catalyst to promote oxidative decomposition reaction of the first reductant.
   With the above configuration (3), since the first reductant decreasing part includes the reductant decomposition catalyst to promote the oxidative decomposition reaction of the first reductant, it is possible to decompose and decrease the unburned content of the first reductant contained in the combustion exhaust gas upstream of the second reductant supply part in the flow path of the combustion exhaust gas. Therefore, as described in (1), it is easy to appropriately adjust the supply amount of the reductant (second reductant) for reducing the specific substance in the combustion exhaust gas of a fuel containing the reductant (first reductant).
(3)' In some embodiments, in the above configuration (1) or (2), the first reductant decreasing part includes a reductant decomposition catalyst to promote decomposition reaction of the first reductant.
   With the above configuration (3)', since the first reductant decreasing part includes the reductant decomposition catalyst to promote the decomposition reaction of the first reductant, it is possible to decompose and decrease the unburned content of the first reductant contained in the combustion exhaust gas upstream of the second reductant supply part in the flow path of the combustion exhaust gas. Therefore, as described in (1), it is easy to appropriately adjust the supply amount of the reductant (second reductant) for reducing the specific substance in the combustion exhaust gas of a fuel containing the reductant (first reductant).
(4) In some embodiments, in any one of the above configurations (1) to (3), the first reductant decreasing part includes a first reduction catalyst to promote reaction between the specific substance and the first reductant.
   With the above configuration (4), since the first reductant decreasing part includes the first reduction catalyst to promote the reaction between the specific substance and the first reductant, it is possible to decrease the unburned content of the first reductant contained in the combustion exhaust gas through oxidation-reduction reaction with the specific substance upstream of the second reductant supply part in the flow path of the combustion exhaust gas. Therefore, as described in (1), it is easy to appropriately adjust the supply amount of the reductant (second reductant) for reducing the specific substance in the combustion exhaust gas of a fuel containing the reductant (first reductant).
(4') In some embodiments, in any one of the above configurations (1) to (4), the first reductant decreasing part includes a neutralizer supply part configured to supply a neutralizer to the combustion exhaust gas to neutralize the first reductant.
   With the above configuration (4)', since the first reductant decreasing part includes the neutralizer supply part configured to supply a neutralizer to neutralize the first reductant, it is possible to decrease the unburned content of the first reductant contained in the combustion exhaust gas through neutralization reaction with the neutralizer upstream of the second reductant supply part in the flow path of the combustion exhaust gas. Therefore, as described in (1), it is easy to appropriately adjust the supply amount of the reductant (second reductant) for reducing the specific substance in the combustion exhaust gas of a fuel containing the reductant (first reductant).
(5) In some embodiments, in any one of the above configurations (1) to (4), the specific substance includes a nitrogen oxide.
   With the above configuration (5), in the flow path of combustion exhaust gas of a fuel containing a first reductant that is capable of reducing nitrogen oxides (NOx), the first reductant decreasing part for decreasing the first reductant in the combustion exhaust gas is provided upstream of the second reductant supply part which supplies a second reductant for reducing nitrogen oxides (NOx) in the combustion exhaust gas. Therefore, as described in (1), it is easy to appropriately adjust the supply amount of the reductant (second reductant) for reducing nitrogen oxides (NOx) in the combustion exhaust gas of a fuel containing the reductant (first reductant).
(6) In some embodiments, in the above configuration (5), at least one of the first reductant or the second reductant includes ammonia or urea.
   With the above configuration (6), at least one of the first reductant or the second reductant includes ammonia or urea. By using ammonia or urea as the first reductant or the second reductant, nitrogen oxides in the combustion exhaust gas can be reduced. Therefore, as described in (1), it is easy to appropriately adjust the supply amount of the reductant (second reductant) for reducing nitrogen oxides (NOx) in the combustion exhaust gas of a fuel containing the reductant (first reductant).
(7) In some embodiments, in any one of the above configurations (1) to (6), the exhaust gas treatment apparatus includes a second reduction catalyst (52) disposed downstream of the second reductant supply part in the flow path to promote reduction reaction of the specific substance.
   With the above configuration (7), since the second reduction catalyst for promoting the reduction reaction of the specific substance is disposed downstream of the second reductant supply part, the second reduction catalyst facilitates the reduction of the specific substance in the combustion exhaust gas through reaction with the residual first reductant and the second reductant, thereby effectively decreasing the specific substance in the combustion exhaust gas.
(8) In some embodiments, in any one of the above configurations (1) to (7), the exhaust gas treatment apparatus includes a control device (60) configured to adjust the supply amount of the second reductant from the second reductant supply part, on the basis of the concentration of the specific substance in the flow path downstream of the first reductant decreasing part and upstream of the second reductant supply part.
   With the above configuration (8), the supply amount of the second reductant is adjusted based on the concentration of the specific substance downstream of the first reductant decreasing part and upstream of the second reductant supply part, so that an appropriate amount of the second reductant that can reduce the specific substance in the combustion exhaust gas is supplied. Further, with the above configuration (8), as described in (1), since the first reductant (unburned content) in the combustion exhaust gas is decreased upstream of the second reductant supply part in the flow path of the combustion exhaust gas, it is relatively easy to adjust the supply amount of the second reductant by the control device.
(9) In some embodiments, in any one of the above configurations (1) to (8), the exhaust gas treatment apparatus includes a control device (60) configured to adjust the supply amount of the second reductant from the second reductant supply part, on the basis of the concentration of the specific substance in a stack through which the combustion exhaust gas from the flow path is discharged.
   With the above configuration (9), the supply amount of the second reductant from the second reductant supply part is adjusted based on the concentration of the specific substance in the stack through which the combustion exhaust gas from the flow path is discharged, so that the concentration of the specific substance in the combustion exhaust gas discharged through the stack is maintained within an appropriate range (such as below a regulation value).
(10) A combustion facility (1) according to at least one embodiment of the present invention includes: a combustion apparatus (100) configured to burn a fuel containing a first reductant that is capable of reducing a specific substance; and the exhaust gas treatment apparatus (102) described in any one of the above (1) to (9) configured to treat combustion exhaust gas of the fuel from the combustion apparatus.
   With the above configuration (10), in the flow path of combustion exhaust gas of a fuel containing a first reductant (e.g., ammonia (NH₃)) that is capable of reducing a specific substance (e.g., NOx), the first reductant decreasing part for decreasing the first reductant in the combustion exhaust gas is provided upstream of the second reductant supply part which supplies a second reductant (e.g., ammonia) for reducing the specific substance (e.g., NOx) in the combustion exhaust gas. As a result, the first reductant (unburned content) in the combustion exhaust gas is decreased upstream of the second reductant supply part in the flow path of the combustion exhaust gas. Thus, since the second reductant is supplied to the combustion exhaust gas with the decreased unburned content of the first reductant, it is easy to adjust the supply amount of the second reductant, for example, the supply amount of the second reductant can be adjusted without considering the amount of unburned content of the first reductant in the combustion exhaust gas. On the other hand, the imbalance of the ratio between the first reductant and the specific substance (e.g., NH₃/NOx) downstream of the second reductant supply part is reduced (smaller variation in the ratio), making it easier to adjust the supply amount of the second reductant. Therefore, with the configuration (1), it is easy to appropriately adjust the supply amount of the reductant (second reductant) for reducing the specific substance in the combustion exhaust gas of a fuel containing the reductant (first reductant).
(11) An exhaust gas treatment method according to at least one embodiment of the present includes: a step of, in a flow path (32) of combustion exhaust gas of a fuel containing a first reductant that is capable of reducing a specific substance, supplying a second reductant for reducing the specific substance in the combustion exhaust gas to the combustion exhaust gas; and a step of decreasing the first reductant in the combustion exhaust gas at a position upstream of where the second reductant is supplied in the flow path.

With the above method (11), in the flow path of combustion exhaust gas of a fuel containing a first reductant (e.g., ammonia (NH₃)) that is capable of reducing a specific substance (e.g., NOx), the first reductant in the combustion exhaust gas is decreased at a position upstream of where a second reductant (e.g., ammonia) for reducing the specific substance (e.g., NOx) in the combustion exhaust gas is supplied. As a result, the first reductant (unburned content) in the combustion exhaust gas is decreased upstream of the second reductant supply position in the flow path of the combustion exhaust gas. Thus, since the second reductant is supplied to the combustion exhaust gas with the decreased unburned content of the first reductant, it is easy to adjust the supply amount of the second reductant, for example, the supply amount of the second reductant can be adjusted without considering the amount of unburned content of the first reductant in the combustion exhaust gas. On the other hand, the imbalance of the ratio between the first reductant and the specific substance (e.g., NH₃/NOx) downstream of the second reductant supply position is reduced (smaller variation in the ratio), making it easier to adjust the supply amount of the second reductant. Therefore, with the method (11), it is easy to appropriately adjust the supply amount of the reductant (second reductant) for reducing the specific substance in the combustion exhaust gas of a fuel containing the reductant (first reductant).

Embodiments of the present invention were described in detail above, but the present invention is not limited thereto, and various amendments and modifications may be implemented.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", and "have" are not intended to be exclusive of other components.

### Reference Signs List

- 1: Combustion facility
- 2: Gas turbine facility
- 4: Steam turbine facility
- 6: Heat recovery steam generator
- 10: Compressor
- 12: Combustor
- 14: Turbine
- 16: Rotational shaft
- 18: Generator
- 20: Turbine
- 22: Rotational shaft
- 24: Generator
- 26: Condenser
- 30: Duct
- 32: Flow path
- 34: Heat transfer tube
- 36: Heat transfer tube
- 38: Stack
- 40: Second reductant supply part
- 42: Nozzle
- 44: Second reductant storage part
- 46: Supply line
- 48: Valve
- 50: First reductant decreasing part
- 51: Mixer
- 52: Second reduction catalyst
- 53: Third reduction catalyst
- 54: Reductant decomposition catalyst
- 60: Control device
- 62: Concentration measuring part
- 64: Concentration measuring part
- 100: Combustion apparatus
- 102: Exhaust gas treatment apparatus

## Claims

1. An exhaust gas treatment apparatus, comprising:
a second reductant supply part, disposed in a flow path of combustion exhaust gas of a fuel containing a first reductant that is capable of reducing a specific substance, for supplying a second reductant for reducing the specific substance in the combustion exhaust gas to the combustion exhaust gas; and
a first reductant decreasing part, disposed upstream of the second reductant supply part in the flow path, for decreasing the first reductant in the combustion exhaust gas.

2. The exhaust gas treatment apparatus according to claim 1,
wherein the second reductant supply part is disposed only downstream of the first reductant decreasing part in the flow path.

3. The exhaust gas treatment apparatus according to claim 1 or 2,
wherein the first reductant decreasing part includes a reductant decomposition catalyst to promote oxidative decomposition reaction of the first reductant.

4. The exhaust gas treatment apparatus according to claim 1 or 2,
wherein the first reductant decreasing part includes a first reduction catalyst to promote reaction between the specific substance and the first reductant.

5. The exhaust gas treatment apparatus according to claim 1 or 2,
wherein the specific substance includes a nitrogen oxide.

6. The exhaust gas treatment apparatus according to claim 5,
wherein at least one of the first reductant or the second reductant includes ammonia or urea.

7. The exhaust gas treatment apparatus according to claim 1 or 2, comprising a second reduction catalyst disposed downstream of the second reductant supply part in the flow path to promote reduction reaction of the specific substance.

8. The exhaust gas treatment apparatus according to claim 1 or 2, comprising a control device configured to adjust a supply amount of the second reductant from the second reductant supply part, on the basis of a concentration of the specific substance in the flow path downstream of the first reductant decreasing part and upstream of the second reductant supply part.

9. The exhaust gas treatment apparatus according to claim 1 or 2, comprising a control device configured to adjust a supply amount of the second reductant from the second reductant supply part, on the basis of a concentration of the specific substance in a stack through which the combustion exhaust gas from the flow path is discharged.

10. A combustion facility, comprising:
a combustion apparatus configured to burn a fuel containing a first reductant that is capable of reducing a specific substance; and
an exhaust gas treatment apparatus according to claim 1 or 2 configured to treat combustion exhaust gas of the fuel from the combustion apparatus.

11. An exhaust gas treatment method, comprising:
a step of, in a flow path of combustion exhaust gas of a fuel containing a first reductant that is capable of reducing a specific substance, supplying a second reductant for reducing the specific substance in the combustion exhaust gas to the combustion exhaust gas; and
a step of decreasing the first reductant in the combustion exhaust gas at a position upstream of where the second reductant is supplied in the flow path.
